(19) **Europäisches Patentamt European Patent Office Office européen des brevets**

(11) **EP 4 304 104 B1**

(12) **EUROPEAN PATENT SPECIFICATION**

(45) Date of publication and mention
of the grant of the patent:
**21.01.2026 Bulletin 2026/04**

(21) Application number: **23182316.2**

(22) Date of filing: **29.06.2023**

(51) International Patent Classification (IPC):
*H04B 7/0456* (2017.01)     *H04J 11/00* (2006.01)
*H04W 76/14* (2018.01)

(52) Cooperative Patent Classification (CPC):
**H04B 7/0456; H04J 11/003; H04W 76/14;**
H04J 11/0036; H04J 11/0053

(54) **CONCURRENT PEER-TO-PEER TRANSMISSIONS VIA INTERFERENCE ALIGNMENT**

GLEICHZEITIGE PEER-TO-PEER-ÜBERTRAGUNGEN ÜBER INTERFERENZAUSRICHTUNG

TRANSMISSIONS SIMULTANÉES DE POSTE À POSTE PAR ALIGNEMENT D'INTERFÉRENCES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **08.07.2022 US 202263368012 P**
     **31.01.2023 US 202318162554**

(43) Date of publication of application:
**10.01.2024 Bulletin 2024/02**

(73) Proprietor: **Cisco Technology, Inc.**
**San Jose, CA 95134-1706 (US)**

(72) Inventors:
• **ALIZADEH, Ardalan**
**Milpitas, 95035 (US)**
• **SILVERMAN, Matthew A.**
**Shaker Heights, 44122 (US)**
• **KALAVAKURU, Sivadeep R.**
**Akron, 44321 (US)**
• **AMINI, Peiman**
**Fremont, 94536 (US)**
• **HART, Brian D.**
**Sunnyvale, 94087 (US)**

(74) Representative: **Warren, Caroline Elisabeth**
**Mathys & Squire**
**The Shard**
**32 London Bridge Street**
**London SE1 9SG (GB)**

(56) References cited:
**CN-A- 105 591 677     CN-A- 112 367 105**

## Description

TECHNICAL FIELD

Embodiments presented in this disclosure generally relate to wireless communication. More specifically, embodiments disclosed herein relate to peer-to-peer transmission using interference alignment.

BACKGROUND

Peer-to-peer (P2P) transmission typically allows for efficient single hop traffic between wireless stations (STAs). Modern WiFi standards have proposed using a wireless access point (AP) to allocate a portion of its own Transmit Opportunity (TXOP) to two STAs to allow for P2P communication between the STAs. For example, the AP can inform the STAs of the TXOP using a trigger frame. This can be referred to as triggered P2P.

Typically, P2P links between STAs provide significant interference to an AP. For example, direct link traffic (e.g., P2P traffic) often carries large amount of data, including large video transmission for video streaming or large amounts of data for virtual reality (VR) or augmented reality (AR) applications. Further, this P2P traffic often requires low latency to support interactive applications (e.g., VR, AR, video conferencing, etc.). But implementing channel access for multiple P2P links is very challenging. This is particularly true where STAs require both low latency and high traffic for P2P transmissions.

CN 112367105 A discusses a low-overhead topological interference alignment and power optimization method, system, equipment and application. The method comprises the following steps: firstly, carrying out singular value decomposition on a D2D and cellular hybrid communication MIMO channel to obtain a plurality of parallel single-input single-output (SISO) channels equivalent to the D2D and cellular hybrid communication MIMO channel; deriving topological interference alignment to obtain a maximum degree-of-freedom condition, proposing an interference influence factor-based topological matrix composition algorithm capable of guaranteeing the maximum degree of freedom, and performing topological interference alignment to eliminate partial interference; and finally, performing iterative power optimization based on Taylor expansion on residual interference to carry out suppression. According to the method, the system can effectively suppress interference on the premise of obtaining the maximum degree of freedom, feedback overhead in the network is effectively reduced on the premise of only sacrificing extremely low throughput, and the method is low in complexity, easy to implement and suitable for actual system application.

CN 105591677 A discusses a D2D (Device To Device) coordinated multi-point transmission method based on the interference alignment technology, which allows a plurality of D2D service pairs to simultaneously occupy a same "frequency-time slot" resource block. The method first utilizes the time-frequency synchronization and satellite positioning method provided by a cellular system to determine an area for performing interference alignment, and realizes the time-frequency synchronization of the receiving and transmitting terminals of the plurality of D2D service pairs. A base station and a receiving terminal measure reference signals successively transmitted by transmitting terminals of the plurality of D2D service pairs, and estimate the channel state information between the base station and a transmitting terminal, and between the transmitting terminal and the receiving terminal of each D2D service pair. The terminals of the plurality of D2D service pairs obtain the power control factor, transmitting terminal pre-coding matrix and receiving terminal interference suppression matrix through base station calculation, and realize the transmission based on the interference alignment technology on an assigned "frequency-time slot" resource block. Under a better signal-to-noise ratio, the method substantially increases the capacity compared with a traditional frequency and time slot orthogonal multiplex scheme.

BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.

Figure 1A illustrates P2P transmission by multiple STAs using interference alignment, according to one embodiment.

Figure 1B illustrates interference alignment, according to one embodiment.

Figure 2 is a block diagram illustrating an STA and AP for P2P transmission by multiple STAs using interference alignment, according to one embodiment.

Figure 3 is a flowchart illustrating P2P transmission by multiple STAs using interference alignment, according to one embodiment.

Figure 4A is a flowchart illustrating determining channel state information using channel sounding for P2P transmission by multiple STAs using interference alignment, according to one embodiment.

Figure 4B further illustrates determining channel state information using channel sounding for P2P transmission by multiple STAs using interference alignment, according to one embodiment.

Figure 5 further illustrates P2P transmission by multiple STAs using interference alignment, according to one embodiment.

To facilitate understanding, identical reference numerals have been used, where possible, to designate identical elements that are common to the figures. It is contemplated that elements disclosed in one embodiment may be beneficially used in other embodiments without specific recitation.

DESCRIPTION OF EXAMPLE EMBODIMENTS

OVERVIEW

Embodiments include a method. The method includes calculating one or more precoder matrices and one more decoder matrices relating to interference alignment for data transmission between a plurality of wireless stations (STAs). The method further includes initiating peer-to-peer (P2P) transmission between the plurality of STAs using the one or more precoder matrices and the one or more decoder matrices, the P2P transmission including: simultaneously transmitting data between at least two pairs of STAs, of the plurality of STAs, using the one or more precoder matrices and the one or more decoder matrices for interference alignment of the simultaneous transmissions.

Embodiments include an apparatus. The apparatus includes: means for calculating one or more precoder matrices and one more decoder matrices relating to interference alignment for data transmission between a plurality of wireless stations (STAs). The apparatus further includes means for initiating peer-to-peer (P2P) transmission between the plurality of STAs using the one or more precoder matrices and the one or more decoder matrices, the P2P transmission comprising: means for transmitting data simultaneously between at least two pairs of STAs, of the plurality of STAs, using the one or more precoder matrices and the one or more decoder matrices for interference alignment of the simultaneous transmissions.

Embodiments further include a system. The system includes a processor and a memory having instructions stored thereon which, when executed on the processor, performs operations. The operations include calculating one or more precoder matrices and one more decoder matrices relating to interference alignment for data transmission between a plurality of STAs. The operations further include initiating P2P transmission between the plurality of STAs using the one or more precoder matrices and the one or more decoder matrices, the P2P transmission including: simultaneously transmitting data between at least two pairs of STAs, of the plurality of STAs, using the one or more precoder matrices and the one or more decoder matrices for interference alignment of the simultaneous transmissions.

Embodiments further include a non-transitory computer-readable medium having instructions stored thereon which, when executed by a processor, performs operations. The operations include calculating one or more precoder matrices and one more decoder matrices relating to interference alignment for data transmission between a plurality of STAs. The operations further include initiating P2P transmission between the plurality of STAs using the one or more precoder matrices and the one or more decoder matrices, the P2P transmission including: simultaneously transmitting data between at least two pairs of STAs, of the plurality of STAs, using the one or more precoder matrices and the one or more decoder matrices for interference alignment of the simultaneous transmissions.

Aspects of the invention are set out in the independent claims and preferred features are set out in the dependent claims. Features of one aspect may be applied to each aspect alone or in combination with other aspects. In particular, preferred features set out in the dependent method claims may be applied to the other independent aspects.

EXAMPLE EMBODIMENTS

In an embodiment, P2P transmission by multiple STAs can be implemented using interference alignment among the STAs. Interference alignment can be, for example, a linear precoding technique that attempts to align interfering signals in one or more of time, frequency, or space (e.g., using antennas). One goal is that user STAs coordinate their transmissions, using linear precoding, such that a combined interfering signal lies in a reduced dimensional subspace at each receiver.

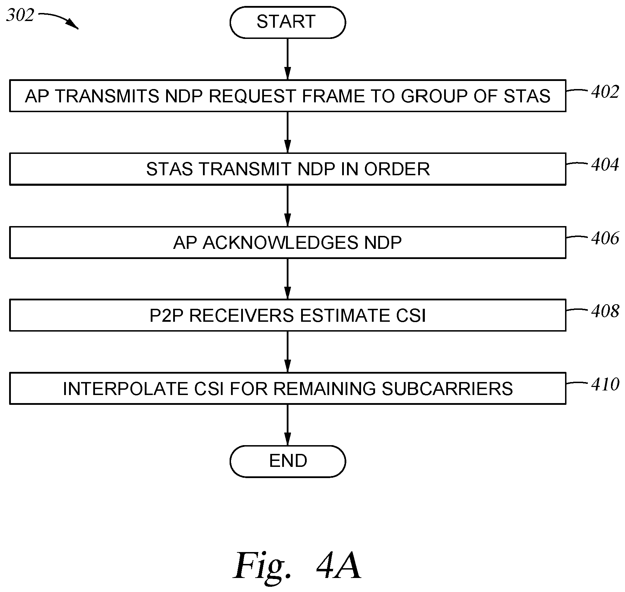

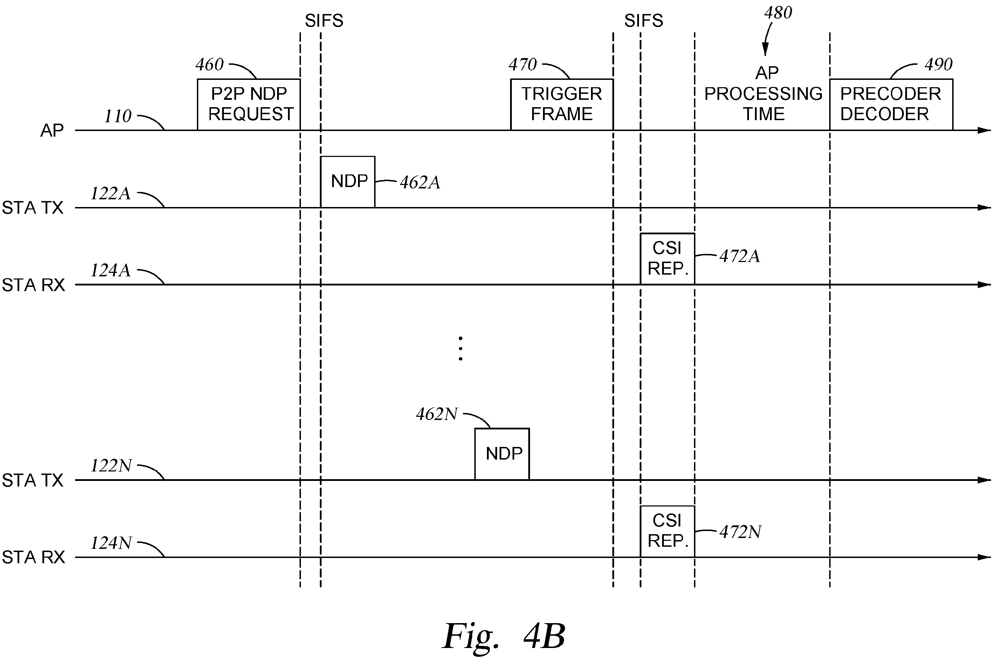

A significant challenge of interference alignment for P2P transmissions is the need of channel state information (CSI) feedback in a central processor for calculating the precoders and decoders. In an embodiment, an AP can be used to coordinate interference alignment and calculate precoders and decoders based on CSI. For example, as discussed below in relation to Figure 4, an AP can coordinate with P2P capable STAs and use channel sounding to estimate CSI at each STA. The AP can then use that estimated CSI to calculate precoders and decoders for interference alignment.

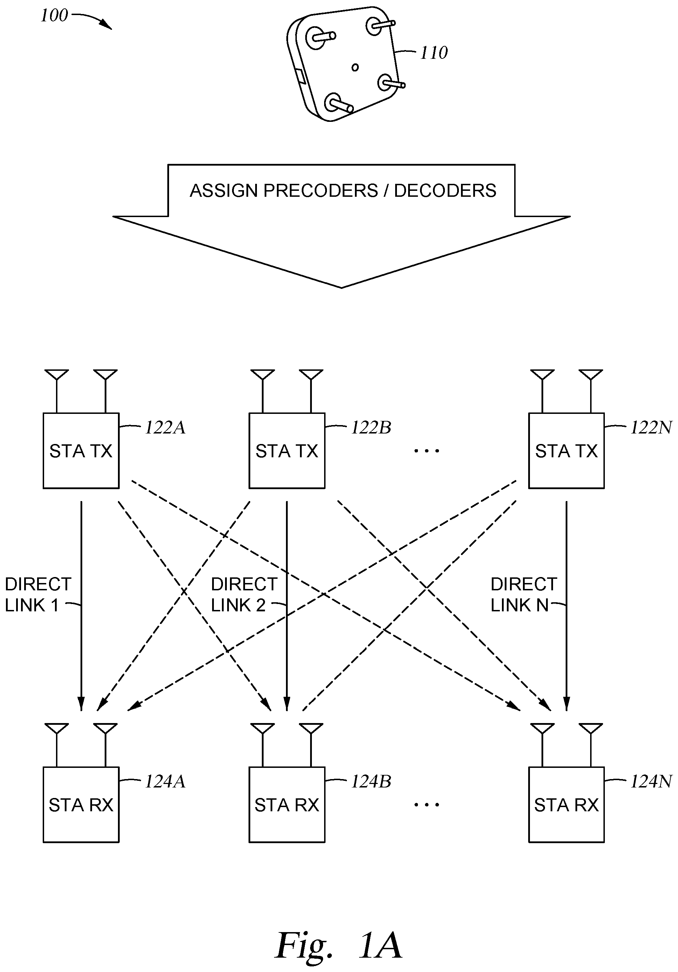

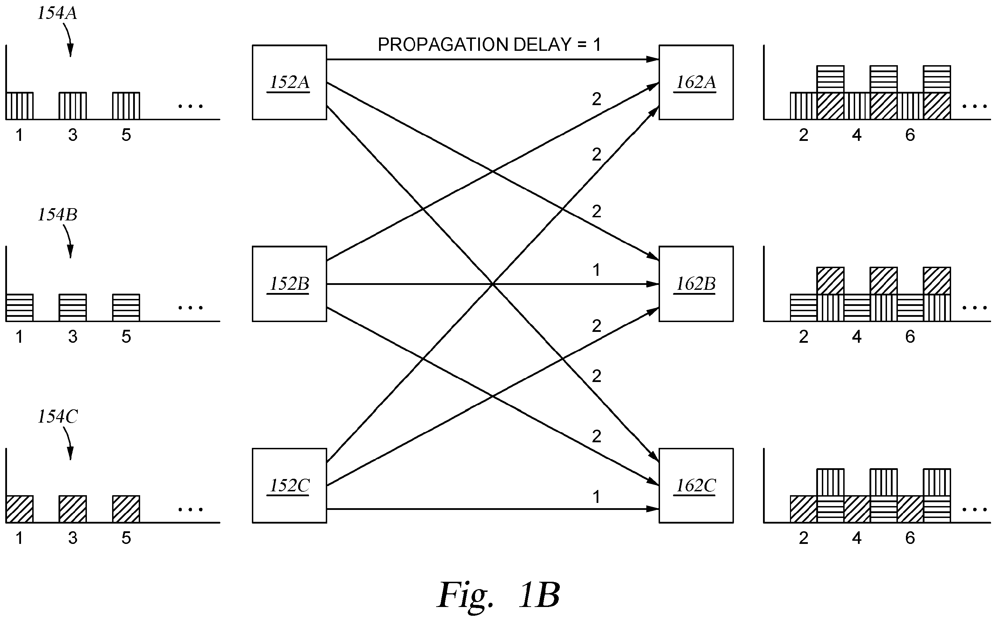

As discussed further below with regard to Figure 1B, interference alignment can result in surprising, and counter-intuitive, efficiencies in communication. For example, interference alignment can result in each user STA having an achievable transmission capacity on the order of half the sum of achievable capacity, much greater than might be expected. Implementing concurrent P2P transmission among STAs using interference alignment, as discussed further below with regard to Figures 1A and 3-5, can result in significant improvements over existing techniques.

In addition to improvements in latency and throughput, use of interference alignment for P2P transmission can provide physical layer security into the P2P transmissions. Eavesdroppers are not able to sniffer over the air signals and decode the packets even by having the precoder and decoder matrices. This is because eavesdroppers will receive a non-aligned version of signals which is very difficult to decode.

Figure 1A illustrates P2P transmission by multiple STAs using interference alignment, according to one embodiment. In an embodiment, a computing environment 100 includes an AP 110 and a number of STAs 122A-N and 124A-N. The AP 110 assigns precoders and decoders for interference alignment (e.g., TXOP precoders and decoders) among the STAs. For example, multiple transmitter STAs 122A-N can simultaneously transmit P2P transmissions to corresponding receiver STAs 124A-N (e.g., using direct links) using interference alignment.

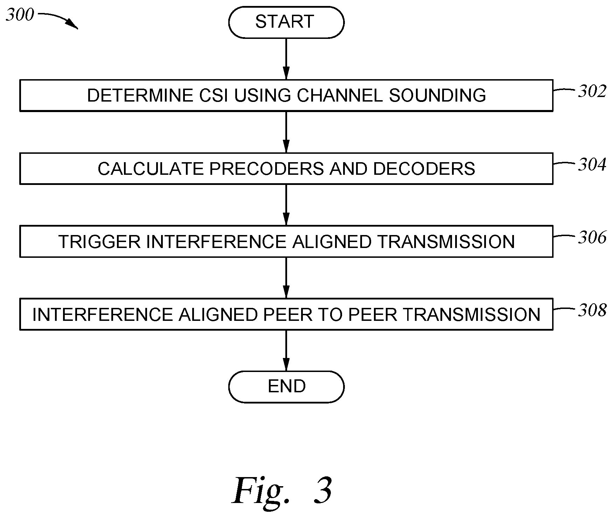

Interference alignment is discussed further, below, with regard to Figure 1B. In an embodiment, the transmitter STAs 122A-N can implement interference alignment in any of multiple different ways (e.g., aligning in any of time, frequency, or space). Figure 1A illustrates interference alignment in the spatial domain (e.g., using antennas) with three concurrent P2P transmissions among STAs, with each STA having two antennas. The transmitter STAs 122A-N can transmit using the same frequency band, but with certain precoders and decoders used to align the signals from the various transmitter STAs 122A-N. Calculating these precoders and decoders is discussed further, below, with regard to Figure 3. This is merely one example, and the P2P transmissions can be interference aligned in any suitable manner (e.g., aligned in time, frequency, or space).

Figure 1B illustrates interference alignment, according to one embodiment. In an embodiment, interference alignment can be implemented to coordinate user signal transmissions, using linear precoding, such that the interference signal lies in a reduced dimensional subspace at each receiver. In alternative techniques, where k-users transmit information through k non-overlapped frequency channels, it can be expected that each user can achieve 1/k of the sum capacity (i.e., Shannon capacity), in average, when an entire band is used (e.g., the capacity $C = {}^1\!/_k * \log(SNR)$ where SNR is the signal-to-noise ratio). But where interference alignment is used (e.g., all transmissions are in the same band but with certain precoders and decoders), each pair can achieve half of sum capacity (e.g., $C = \frac{1}{2}\log(SNR)$), which is significantly greater than 1/k.

Figure 1B illustrates an example of alignment for three pairs of STAs. While Figure 1B uses time for alignment of interferences, with different discrete time delay per channel, as discussed above this is merely one example. Interference alignment can be achieved in any of frequency, time, or space. A transmitting STA 152A transmits a signal 154A to three receiving STAs 162A-C. A second transmitting STA 152B transmits a signal 154B to three receiving STAs 162A-C. A third transmitting STA 152C transmits a signal 154C to three receiving STAs 162A-C. Each of the three transmitting STAs 152A-C implements a propagation delay to align the signals at the receiving STAs 162A-C. As shown, the received signal at each of the receiving STAs 162A-C is aligned, to allow for concurrent transmission by the three transmitting STAs 152A-C using half of the available sum capacity.

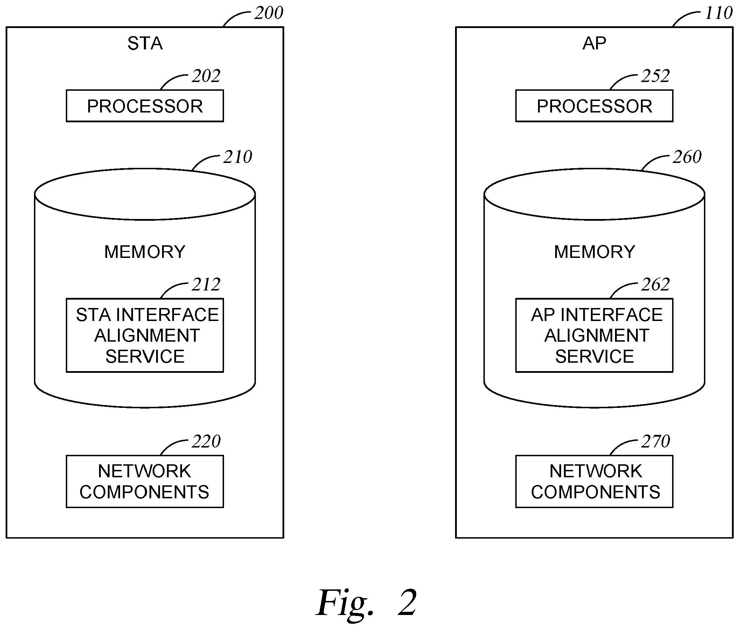

Figure 2 is a block diagram illustrating an STA 200 and AP 110 for P2P transmission by multiple STAs using interference alignment, according to one embodiment. In an embodiment, the STA 200 corresponds with any of the STAs 122AN or 124A-N illustrated in Figure 1. The STA 200 includes a processor 202, a memory 210, and network components 220. The processor 202 generally retrieves and executes programming instructions stored in the memory 210. The processor 202 is included to be representative of a single central processing unit (CPU), multiple CPUs, a single CPU having multiple processing cores, graphics processing units (GPUs) having multiple execution paths, and the like.

The network components 220 include the components necessary for the STA 200 to interface with a wireless communication network, as discussed above in relation to Figure 1. For example, the network components 220 can include WiFi or cellular network interface components and associated software.

Although the memory 210 is shown as a single entity, the memory 210 may include one or more memory devices having blocks of memory associated with physical addresses, such as random access memory (RAM), read only memory (ROM), flash memory, or other types of volatile and/or non-volatile memory. The memory 210 generally includes program code for performing various functions related to use of the STA 200. The program code is generally described as various functional "applications" or "modules" within the memory 210, although alternate implementations may have different functions and/or combinations of functions. Within the memory 210, an STA interference alignment service 212 facilitates P2P transmission by multiple STAs using interference alignment, as discussed below in relation to Figures 3-5.

The AP 110 includes a processor 252, a memory 260, and network components 270. The processor 252 generally retrieves and executes programming instructions stored in the memory 260. The processor 252 is included to be representative of a single central processing unit (CPU), multiple CPUs, a single CPU having multiple processing cores, graphics processing units (GPUs) having multiple execution paths, and the like.

The network components 270 include the components necessary for the AP 110 to interface with a wireless communication network, as discussed above in relation to Figure 1. For example, the network components 270 can include WiFi or cellular network interface components and associated software.

Although the memory 260 is shown as a single entity, the memory 260 may include one or more memory devices having blocks of memory associated with physical addresses, such as random access memory (RAM), read only memory (ROM), flash memory, or other types of volatile and/or non-volatile memory. The memory 260 generally includes program code for performing various functions related to use of the AP 110. The program code is generally described as various functional "applications" or "modules" within the memory 260, although alternate implementations may have different functions and/or combinations of functions. Within the memory 260, the AP interference alignment service 262 facilitates coordinating P2P transmission by multiple STAs using interference alignment, as discussed below in relation to Figures 3-5.

Figure 3 is a flowchart 300 illustrating P2P transmission by multiple STAs using interference alignment, according to one embodiment. At block 302, an interference alignment service (e.g., the STA interference alignment service 212 illustrated in Figure 2, the AP interference alignment service 262 illustrated in Figure 2, or a combination of both) determines channel state information (CSI) using channel sounding. In an embodiment, CSI is used to calculate precoders and decoders for interference alignment, and so the interference alignment service calculates CSI relating to the STAs engaging in P2P transmission. This can be done in any suitable manner. For example, the interference alignment service can use null data packet (NDP) request frames and acknowledgments, between an AP and STAs, to estimate CSI for the STAs. This is discussed further, below, with regard to Figures 4A-B. This is merely one example, and any suitable technique can be used to determine CSI.

In an embodiment, sounding intervals can be selected by the AP (e.g., by an AP alignment service). In one embodiment, the AP sounds the STAs per TXOP. However, in another embodiment, the AP collects and stores the CSI from each transmitter in its memory and correlates after reception of NDPs in each sounding interval (or TXOP). In this embodiment, the AP will only trigger sounding if the correlation of the channels are low, which indicates that the precoders and decoders need to be updated. This can reduce the overhead of sounding significantly when there is little change in the environment

At block 304, the interference alignment service calculates precoders and decoders. For example, the interference alignment service can calculate the precoders and decoders (e.g., precoder and decoder matrices) for interference alignment based on the CSI calculated at block 302. In an embodiment, the interference alignment service uses an iterative technique which works based on the reciprocity of the transmissions.

For example, the interference alignment service can calculate the best precoder in each iteration, and then use that precoder to recalculate a decoder, using existing techniques. This is merely one example, and any suitable technique can be used to calculate the precoders and decoders. In an embodiment, an AP calculates the precoders and decoders based on the CSI. Alternatively, any other suitable network component (e.g., a controller, an STA, or a combination of components) can calculate the precoders and decoders.

While embodiments discussed herein describe using CSI information to calculate precoders and decoders, this is merely one example. Alternatively, or in addition, blind interference alignment techniques can be used. In an embodiment, blind interference alignment relies on the statistical information of the transmitter and CSI is not required. However, blind interference alignment typically requires modifications in the pilot subcarriers in orthogonal frequency division multiple access (OFDMA) transmission and reception. Blind interference alignment can be implemented as an alternative to use of CSI to calculate precoders and decoders, where suitable.

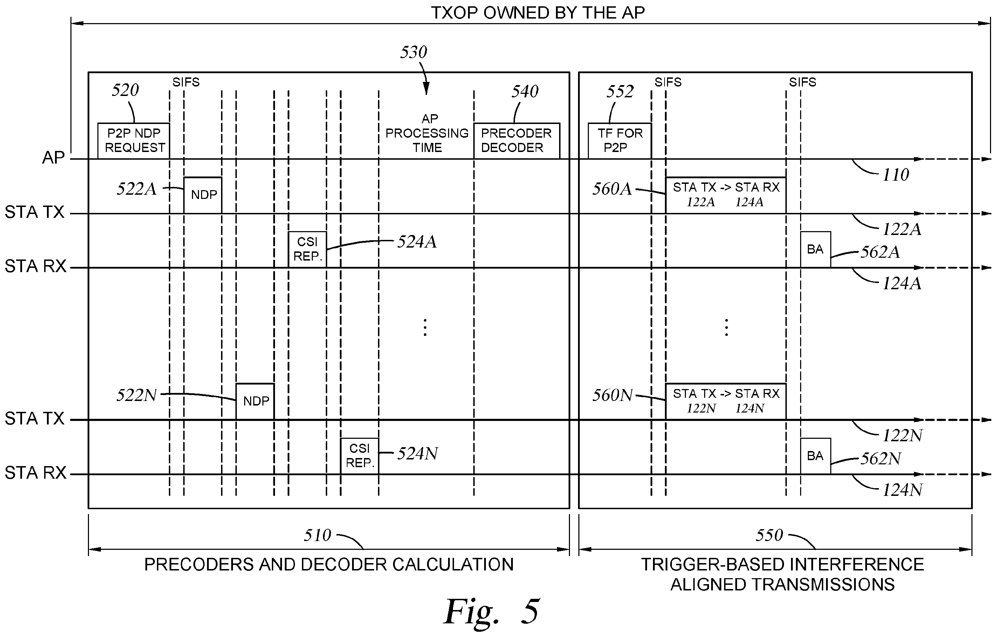

At block 306, the interference alignment service triggers interference aligned transmission. For example, after sounding procedure and calculation of the precoders and decoders at P2P transmitter and receiver STAs, as discussed above in relation to blocks 302 and 304, an AP knows transmitter and receiver pairs and transmits a trigger frame. This is illustrated further, below, with regard to Figure 5. In an embodiment, the power, clock offset, and time alignment of responses are similar to existing trigger based uplink processes. However, in an embodiment, the interference alignment service includes in the trigger frame the matrices for the transmitter STA precoder and receiver STA decoder.

At block 308, the interference alignment service initiates P2P transmission and transmits interference aligned P2P transmissions. In an embodiment, concurrent transmissions can occur after short inter-frame spacing (SIFS), based on the aligned interferences (e.g., using the precoder matrices). ACKs from the receiver STAs can then be transmitted concurrently, using existing trigger based OFDMA (TB-OFDMA) or trigger based uplink multiple-user multiple-input multiple-output (TB UL MU-MIMO) techniques.

Figure 4A is a flowchart illustrating determining channel state information using channel sounding for P2P transmission by multiple STAs using interference alignment, according to one embodiment. In an embodiment, Figure 4A corresponds with block 302 illustrated in Figure 3, above. At block 402, an AP interference alignment service (e.g., the AP interference alignment service 262 illustrated in Figure 2) transmits an NDP request frame to a group of STAs.

For example, the AP interference alignment service can transmit an NDP request frame during a time period when the AP owns the TXOP window. In an embodiment, the AP interference alignment service does not know which STAs are transmitting, and which are receiving, for P2P communication. The AP interference alignment service can therefore transmit the NDP request frame to each STA that is capable of P2P communication (e.g., each AP associated with the AP). This is merely an example, and the interference alignment service can transmit the NDP request frame to any STA or group of STAs.

At block 404, one or more STA interference alignment services (e.g., the STA interference alignment service 212 illustrated in Figure 2) transmits the NDP in order. In an embodiment, the AP interference alignment service indicates an order in the NDP request frame in which the receiving STAs should respond. Each of the STAs receives the NDP request frame, and responds by transmitting an NDP to the AP, in the order indicated in the NDP request frame.

At block 406, the AP interference alignment service acknowledges the NDP. In an embodiment, the AP interference alignment service responds with an acknowledgement (ACK) to each transmitting STA. Alternatively, or in addition, the AP responds with a block ACK (BA) at the end of receiving the NDPs. In an embodiment, the AP can use a BA if the transmitting and receiving STAs are known by the AP.

At block 408, the STA interference alignment services each estimate CSI for the relevant STA. In an embodiment, the STA interference alignment service can use techniques similar to existing beamforming reports (BFR) packets, which provide rotation angles of a feedback matrix for a selection of subcarriers (e.g., every 4th or 16th subcarrier). The size of the angle parameters (e.g., phi and psi) is selected as a multiple upload (MU) case which is 12 or 16 bits. In an embodiment, the order of BFR transmissions by STA receivers are based on the order of corresponding transmitters, because of the usage of this knowledge by AP at precoder and decoder calculation (e.g., as discussed above in relation to block 304 illustrated in Figure 3).

At block 410, the AP interference alignment service, the STA interference alignment service, or any other suitable service, interpolates CSI for remaining subcarriers. For example, the STA interference alignment services for the receiving STAs calculate CSI for the relevant STA and report the CSI to the AP. The AP interference alignment service can then interpolate CSI for remaining subcarriers, not included in the reported CSI information.

Figure 4B further illustrates determining CSI using channel sounding for P2P transmission by multiple STAs using interference alignment, according to one embodiment. In an embodiment, Figure 4B corresponds to the flow illustrated in Figure 4A and illustrates an AP 110 determining CSI for transmitting STAs 122A-N and receiving STAs 124A-N (e.g., the AP and STAs illustrated in Figure 1).

The AP 110 transmits a P2P NDP request 460 to the STAs 122A-N and 124A-N. In an embodiment, as discussed above in relation to block 404 illustrated in Figure 4A, the P2P NDP request 460 identifies a response order for the STAs 122A-N and 124A-N. Based on this order, the transmitting STA 122A responds by transmitting an NDP 462A to the AP 110 (e.g., following a SIFS). The transmitting STA 122N responds by transmitting an NDP 462N to the AP 110 later in time. As discussed above in relation to Figure 4A, the receiving STAs 124A-N estimate CSI.

In an embodiment, the AP 110 transmits a trigger frame 470 to the STAs 122A-N and 124A-N. The receiving STAs 124A-N respond by transmitting respective CSI reports 472A-N to the AP 110. The CSI reports 472A-N indicate the estimated CSI for the STAs 124A-N. As discussed above in relation to block 410 illustrated in Figure 4A, the AP 110 can interpolate CSI for remaining subcarriers (e.g., subcarriers not included in the CSI reports 472A-N.

While Figure 4B illustrates use of a trigger frame 470 from the AP to the STAs 122A-N and 124A-N this is merely one example. In an embodiment, the STAs 122A-N and 124A-N can report estimated CSI information without use of a trigger frame. For example, a trigger frame can be used for a relatively large number of STA transmit/receive pairs to reduce sounding overhead, and not used for a relatively small number of STA transmit/receive pairs.

In an embodiment, during an AP processing time 480, the AP 110 calculates a precoder and decoder 490 (e.g., precoder and decoder matrices). This is discussed further, above, in relation to block 304 illustrated in Figure 3. The precoder and decoder 490 can be used for interference alignment for P2P transmission among the STAs 122A-N and 124A-N.

Further, while Figure 4B illustrates use of a single AP 110, this is merely an example. In an embodiment, more than one AP can be used. For example, TXOP can be shared between two APs (e.g., coordinated neighbor APs). In this embodiment, one AP can be a primary AP and transmit trigger frames, while receiving CSI and any other STA information from one or more secondary APs. In this embodiment, the primary AP can calculate the precoder and decoder matrices based on the information received from the secondary AP(s).

Figure 5 further illustrates P2P transmission by multiple STAs using interference alignment, according to one embodiment. An AP 110 determines CSI for transmitting STAs 122A-N and receiving STAs 124A-N (e.g., the AP and STAs illustrated in Figure 1). In an embodiment, a TXOP period owned by the AP 110 includes a precoder and decoder calculation phase 510 and a trigger based interference aligned transmission phase 550. The precoder and decoder calculation phase 510 corresponds with Figure 4B illustrated above.

The AP 110 transmits a P2P NDP request 520 to the STAs 122A-N and 124A-N. In an embodiment, as discussed above in relation to block 404 illustrated in Figure 4A, the P2P NDP request 520 identifies a response order for the STAs 122A-N and 124A-N. Based on this order, the transmitting STA 122A responds by transmitting an NDP 522A to the AP 110 (e.g., following a SIFS). The transmitting STA 122N responds by transmitting an NDP 522N to the AP 110 later in time. As discussed above in relation to Figure 4A, the receiving STAs 124A-N estimate CSI.

In an embodiment, the AP 110 transmits a trigger frame to the STAs 122A-N and 124A-N. The receiving STAs 124A-N respond by transmitting respective CSI reports 524A-N to the AP 110. The CSI reports 524A-N indicate the estimated CSI for the STAs 124A-N. As discussed above in relation to block 410 illustrated in Figure 4A, the AP 110 can interpolate CSI for remaining subcarriers (e.g., subcarriers not included in the CSI reports 524A-N.

In an embodiment, during an AP processing time 530, the AP 110 calculates a precoder and decoder 540. This is discussed further, above, in relation to block 304 illustrated in Figure 3.

During a trigger based interference aligned transmission phase 550, the STAs 122A-N and 124A-N use the precoder and decoder 540 for interference aligned transmission. The AP 110 transmits a trigger frame (TF) for P2P 552 to the transmitting STAs 122A-N to initiate P2P transmissions.

The transmitting STAs 122A-N then transmit respective interference aligned transmissions 560A-N to the receiving STAs 124A-N as P2P transmissions. In an embodiment, the transmissions 560A-N are simultaneous, at least in part. For example, the transmitting STAs 122A-N and receiving STAs 124A-N use the precoder and decoder 540 to implement interference aligned P2P transmissions. The transmitting STAs 122A-N transmit during an allocated P2P physical layer protocol data unit (PPDU) (e.g., allocated based on the TF for P2P 552). In an embodiment, the receiving STAs 124A-N respond to the respective transmitting STAs 122A-N with block acknowledgements (BAs) 562A-N.

In an embodiment, mathematical analysis can be used to evaluate the capability of interference alignment techniques to improve latency and throughput for P2P transmission. For example, sounding overhead (e.g., used to estimate CSI) and throughput can be roughly estimated. The sounding time can be simplified as: T_SOUNDING = T_P2P_NDP_REQ + $N$ * T_NPD + T_TF_CSI + T_CSI_REPORTS + T_PROCESS + T_PRECODER . In this example, T_SOUNDING represents the total sounding time, T_P2P_NDP_REQ represents the time to send NDP requests (e.g., the P2P NDP request 520 illustrated in Figure 5), $N$ * T_NPD represents the time to send $N$ NDP responses (e.g., the NDP responses 522A-N illustrated in Figure 5), T_TF_CSI and T_CSI_REPORTS represent the time to estimate and report CSI by the STAs, and T_PROCESS + T_PRECODER represent the time to process the CSI and calculate a precoder.

Assume 3 pairs of STAs and 100$\mu$S for the length of NDP and 200$\mu$S for the other packets, sounding would require approximately 1.3mS, or 1.5mS including SIFS. In a typical indoor WiFi environment, the time coherency of the channel can be on the order of 50mS to 90mS. For the case of faster movement by STAs, it can go down 20mS. Therefore, it can be seen that the use of interference alignment is beneficial even for clients who are time sensitive because of providing the concurrent transmissions after this sounding interval. Depending on the size of the TXOP allocated by an AP to P2P clients, some STAs may completely lose the P2P transmission during TXOP (e.g., using existing techniques) while by using interference alignment techniques described above every P2P has transmission happening during each TXOP.

Turning to throughput, in a simple derivation of data rate via Shannon capacity equation, assuming 20MHz bandwidth and 20dB SNRs between all P2P links (AWGN channel), the "sum" capacity of the channel is: C (bits/Sec) = 1/K * W * log2 ( 1 + SNR) = 1/3 * 20MHz * log2(1 + 10^(20/10)) =~ 44Mbps. Using the techniques described above provides: C (bits/Sec) = 1/2 * W * log2 ( 1 + SNR) = 1/2 * 20MHz * log2(1 + 10^(20/10)) =~ 66Mbps. If we assume the length of TXOPs are in the range of 20ms, the overhead of sounding is only 7% which makes the capacity 61.4Mbps. Thus, these techniques can improve the throughput significantly if we consider more P2P clients. For instance, if we assume 6 concurrent P2P based on interference alignment, the sum capacity will be half (~22Mbps) in existing techniques, while we still have the same sum capacity of 66Mbps in using the techniques described above. The sounding duration will be larger but it should only change the TXOP by 1% to 2%.

In summary, techniques for peer-to-peer (P2P) transmission using interference alignment are disclosed. These techniques include calculating one or more precoder matrices and one more decoder matrices relating to interference alignment for data transmission between a plurality of wireless stations (STAs). The techniques further include initiating P2P transmission between the plurality of STAs using the one or more precoder matrices and the one or more decoder matrices, the P2P transmission including: simultaneously transmitting data between at least two pairs of STAs, of the plurality of STAs, using the one or more precoder matrices and the one or more decoder matrices for interference alignment of the simultaneous transmissions.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," or "at least one of A or B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

In view of the foregoing, the scope of the present disclosure is determined by the claims that follow.

## Claims

1. A method (300), comprising:

determining channel state information, CSI, for one or more wireless stations, STAs, of a plurality of STAs, wherein the CSI is determined (302) based on sounding between the one or more STAs and a wireless access point, AP, wherein determining the CSI further comprises:

transmitting a null data packet, NDP, request frame from the AP to the one or more STAs, the NDP request frame identifying a response order for the one or more STAs; receiving a response at the AP from each of the one or more STAs, the transmission of the response by the respective STA based on the identified response order;

calculating (304) one or more precoder matrices and one more decoder matrices based on the CSI, the one or more precoder matrices and the one more decoder matrices relating to interference alignment for data transmission between the plurality of, STAs,; and
initiating peer-to-peer, P2P, transmission between the plurality of STAs using the one or more precoder matrices and the one or more decoder matrices, the P2P transmission comprising:
simultaneously transmitting data between at least two pairs of STAs, of the plurality of STAs, using the one or more precoder matrices and the one or more decoder matrices for interference alignment of the simultaneous transmissions.

2. The method (300) of claim 1, wherein an, AP, calculates the one or more precoder matrices and one more decoder matrices relating to interference alignment.

3. The method (300) of claim 2, wherein the AP initiates the P2P transmission between the plurality of STAs.

4. The method (300) of claim 1, further comprising:

determining (302) a sounding interval; and
initiating the sounding, at the AP, based on the sounding interval.

5. The method (300) of any preceding claim, wherein the simultaneous transmissions are interference aligned in a spatial domain using a plurality of antennas relating to the pairs of STAs.

6. Apparatus comprising:

means for determining channel state information, CSI, for one or more wireless stations, STAs, of a plurality of STAs, wherein the CSI is determined (302) based on sounding between the one or more STAs and a wireless access point, AP, comprising:

means for transmitting a null data packet, NDP, request frame from the AP to the one or more STAs, the NDP request frame identifying a response order for the one or more STAs;
means for receiving a response at the AP from each of the one or more STAs, the transmission of the response by the respective STA based on the identified response order;

means for calculating (304) the one or more precoder matrices and one more decoder matrices based on the CSI, the one or more precoder matrices and the one more decoder matrices relating to interference alignment for data transmission between the plurality of wireless stations, STAs; and
means for initiating peer-to-peer, P2P, transmission between the plurality of STAs using the one or more precoder matrices and the one or more decoder matrices, the P2P transmission comprising:
means for transmitting data simultaneously between at least two pairs of STAs, of the plurality of STAs, using the one or more precoder matrices and the one or more decoder matrices for interference alignment of the simultaneous transmissions.

7. The apparatus according to claim 6 further comprising means for implementing the method (300) according to any of claims 2 to 5.

8. A computer program, computer program product or computer readable medium comprising instructions which, when executed by a computer, cause the computer to carry out the steps of the method (300) of any of claims 1 to 5.

**Patentansprüche**

1. Verfahren (300), umfassend:

Bestimmen von Kanalzustandsinformationen, CSI, für eine oder mehrere drahtlose Stationen, STA, einer Vielzahl von STA, wobei die CSI auf der Basis einer Sondierung zwischen der einen oder den mehreren STA und einem drahtlosen Zugangspunkt, AP, bestimmt (302) werden, wobei das Bestimmen der CSI ferner umfasst:

Übertragen eines Null-Datenpaket-Anforderungsrahmens, NDP-Anforderungsrahmens, von dem AP an die eine oder die mehreren STA, wobei der NDP-Anforderungsrahmen eine Antwortreihenfolge für die eine oder die mehreren STA identifiziert;
Empfangen einer Antwort an dem AP von jeder der einen oder der mehreren STA, wobei die Übertragung der Antwort durch die jeweilige STA auf der identifizierten Antwortreihenfolge basiert;

Berechnen (304) einer oder mehrerer Vorcodierermatrizes und einer oder mehrerer Decodierermatrizes auf der Basis der CSI, wobei sich die eine oder die mehreren Vorcodierermatrizes und die eine oder die mehreren Decodierermatrizes auf eine Interferenzausrichtung zur Datenübertragung zwischen der Vielzahl von STA beziehen; und
Initiieren einer Peer-to-Peer-Übertragung, P2P-Übertragung, zwischen der Vielzahl von STA unter Verwendung der einen oder der mehreren Vorcodierermatrizes und der einen oder der mehreren Decodierermatrizes, wobei die P2P-Übertragung umfasst:
gleichzeitiges Übertragen von Daten zwischen mindestens zwei Paaren von STA der Vielzahl von STA unter Verwendung der einen oder der mehreren Vorcodierermatrizes und der einen oder der mehreren Decodierermatrizes zur Interferenzausrichtung der gleichzeitigen Übertragungen.

2. Verfahren (300) nach Anspruch 1, wobei ein AP die eine oder die mehreren Vorcodierermatrizes und eine oder mehrere Decodierermatrizes in Bezug auf eine Interferenzausrichtung berechnet.

3. Verfahren (300) nach Anspruch 2, wobei der AP die P2P-Übertragung zwischen der Vielzahl von STA initiiert.

4. Verfahren (300) nach Anspruch 1, ferner umfassend:

Bestimmen (302) eines Sondierungsintervalls; und
Initiieren der Sondierung an dem AP auf der Basis des Sondierungsintervalls.

5. Verfahren (300) nach einem vorhergehenden Anspruch, wobei die gleichzeitigen Übertragungen in einer räumlichen Domäne unter Verwendung einer Vielzahl von Antennen in Bezug auf die Paare von STA interferenzausgerichtet werden.

6. Vorrichtung, umfassend:

Mittel zum Bestimmen von Kanalzustandsinformationen, CSI, für eine oder mehrere drahtlose Stationen, STA, einer Vielzahl von STA, wobei die CSI auf der Basis einer Sondierung zwischen der einen oder den mehreren STA und einem drahtlosen Zugangspunkt, AP, bestimmt (302) werden, umfassend:

Mittel zum Übertragen eines Null-Datenpaket-Anforderungsrahmens, NDP-Anforderungsrahmens, von dem AP an die eine oder die mehreren STA, wobei der NDP-Anforderungsrahmen eine Antwortreihenfolge für die eine oder die mehreren STA identifiziert;
Mittel zum Empfangen einer Antwort an dem AP von jeder der einen oder der mehreren STA, wobei die Übertragung der Antwort durch die jeweilige STA auf der identifizierten Antwortreihenfolge basiert;

Mittel zum Berechnen (304) der einen oder der mehreren Vorcodierermatrizes und einer oder mehrerer Decodierermatrizes auf der Basis der CSI, wobei sich die eine oder die mehreren Vorcodierermatrizes und die eine oder die mehreren Decodierermatrizes auf eine Interferenzausrichtung zur Datenübertragung zwischen der Vielzahl von drahtlosen Stationen, STA, beziehen; und
Mittel zum Initiieren einer Peer-to-Peer-Übertragung, P2P-Übertragung, zwischen der Vielzahl von STA unter Verwendung der einen oder der mehreren Vorcodierermatrizes und der einen oder der mehreren Decodierermatrizes, wobei die P2P-Übertragung umfasst:
Mittel zum gleichzeitigen Übertragen von Daten zwischen mindestens zwei Paaren von STA der Vielzahl von STA unter Verwendung der einen oder der mehreren Vorcodierermatrizes und der einen oder der mehreren Decodierermatrizes zur Interferenzausrichtung der gleichzeitigen Übertragungen.

7. Vorrichtung nach Anspruch 6, ferner umfassend Mittel zum Implementieren des Verfahrens (300) nach einem der Ansprüche 2 bis 5.

8. Computerprogramm, Computerprogrammprodukt oder computerlesbares Medium, das Anweisungen umfasst, die bei Ausführung durch einen Computer bewirken, dass der Computer die Schritte des Verfahrens (300) nach einem der Ansprüche 1 bis 5 durchführt.

**Revendications**

1. Procédé (300), comprenant :

la détermination d'informations d'état de canal, CSI, pour une ou plusieurs stations sans fil, STA, d'une pluralité de STA, dans lequel les CSI sont déterminées (302) sur la base d'un sondage entre les une ou plusieurs STA et un point d'accès, AP, sans fil, dans lequel la détermination des CSI comprend en outre :

la transmission d'une trame de demande de paquet de données nul, NDP, par l'AP aux une ou plusieurs STA, la trame de demande de NDP identifiant un ordre de réponse des une ou plusieurs STA ;
la réception d'une réponse au niveau de l'AP depuis chacune des une ou plusieurs STA, la transmission de la réponse par la STA respective étant basée sur l'ordre de réponse identifié ;

le calcul (304) d'une ou plusieurs matrices de précodeur et d'une plusieurs matrices de décodeur sur la base des CSI, les une ou plusieurs matrices de précodeur et une plusieurs matrices de décodeur se rapportant à un alignement d'interférences des transmissions de données entre la pluralité de STA ; et
le lancement d'une transmission de pair-à-pair, P2P, entre la pluralité de STA à l'aide des une ou plusieurs matrices de précodeur et des une ou plusieurs matrices de décodeur, la transmission P2P comprenant :
la transmission simultanée de données entre au moins deux paires de STA, de la pluralité de STA, à l'aide des une ou plusieurs matrices de précodeur et des une ou plusieurs matrices de décodeur pour l'alignement d'interférences des transmissions simultanées.

2. Procédé (300) selon la revendication 1, dans lequel un, AP, calcule les une ou plusieurs matrices de précodeur et une plusieurs matrices de décodeur se rapportant à un alignement d'interférences.

3. Procédé (300) selon la revendication 2, dans lequel l'AP lance la transmission P2P entre la pluralité de STA.

4. Procédé (300) selon la revendication 1, comprenant en outre :

la détermination (302) d'un intervalle de sondage ; et
le lancement du sondage, au niveau de l'AP, sur la base de l'intervalle de sondage.

5. Procédé (300) selon toute revendication précédente, dans lequel les transmissions simultanées sont alignées par interférences dans un domaine spatial à l'aide d'une pluralité d'antennes se rapportant aux paires de STA.

6. Appareil comprenant :

un moyen de détermination d'informations d'état de canal, CSI, pour une ou plusieurs stations sans fil, STA, d'une pluralité de STA, dans lequel les CSI sont déterminées (302) sur la base d'un sondage entre les un ou plusieurs STA et un point d'accès, AP, sans fil, comprenant :

un moyen de transmission d'une trame de demande de paquet de données nul, NDP, par l'AP aux une ou plusieurs STA, la trame de demande de NDP identifiant un ordre de réponse des une ou plusieurs STA ;
un moyen de réception d'une réponse au niveau de l'AP depuis chacune des une ou plusieurs STA, la transmission de la réponse par la STA respective étant basée sur l'ordre de réponse identifié ;

un moyen de calcul (304) des une ou plusieurs matrices de précodeur et une plusieurs matrices de décodeur sur la base des CSI, les une ou plusieurs matrices de précodeur et les une plusieurs matrices de décodeur se rapportant à un alignement d'interférences des transmissions de données entre la pluralité de STA ; et
un moyen de lancement d'une transmission de pair-à-pair, P2P, entre la pluralité de STA à l'aide des une ou plusieurs matrices de précodeur et des une ou plusieurs matrices de décodeur, la transmission P2P comprenant :
un moyen de transmission simultanée de données entre au moins deux paires de STA, de la pluralité de STA, à l'aide des une ou plusieurs matrices de précodeur et des une ou plusieurs matrices de décodeur pour un alignement d'interférences des transmissions simultanées.

7. Appareil, selon la revendication 6, comprenant en outre un moyen de mise en œuvre du procédé (300) selon l'une quelconque des revendications 2 à 5.

8. Programme d'ordinateur, produit de programme d'ordinateur ou support lisible comprenant des instructions qui, une fois exécutées par un ordinateur, amènent l'ordinateur à entreprendre les étapes du procédé (300) selon l'une quelconque des revendications 1 à 5.

100

110

ASSIGN PRECODERS / DECODERS

STA TX — 122A

STA TX — 122B  · · ·  STA TX — 122N

DIRECT
LINK 1

DIRECT
LINK 2

DIRECT
LINK N

STA RX — 124A

STA RX — 124B  · · ·  STA RX — 124N

*Fig. 1A*

Fig. 1B

STA 200

PROCESSOR 202

MEMORY 210

STA INTERFACE ALIGNMENT SERVICE 212

NETWORK COMPONENTS 220

AP 110

PROCESSOR 252

MEMORY 260

AP INTERFACE ALIGNMENT SERVICE 262

NETWORK COMPONENTS 270

*Fig. 2*

*300* →

$$\boxed{\;\text{START}\;}$$

↓

| DETERMINE CSI USING CHANNEL SOUNDING | ⎤— *302* |

↓

| CALCULATE PRECODERS AND DECODERS | ⎤— *304* |

↓

| TRIGGER INTERFERENCE ALIGNED TRANSMISSION | ⎤— *306* |

↓

| INTERFERENCE ALIGNED PEER TO PEER TRANSMISSION | ⎤— *308* |

↓

$$\boxed{\;\text{END}\;}$$

*Fig. 3*

*302*

START

AP TRANSMITS NDP REQUEST FRAME TO GROUP OF STAS — *402*

STAS TRANSMIT NDP IN ORDER — *404*

AP ACKNOWLEDGES NDP — *406*

P2P RECEIVERS ESTIMATE CSI — *408*

INTERPOLATE CSI FOR REMAINING SUBCARRIERS — *410*

END

*Fig. 4A*

*Fig. 4B*

*Fig. 5*

**EP 4 304 104 B1**

**REFERENCES CITED IN THE DESCRIPTION**

**Patent documents cited in the description**

- CN 112367105 A

- CN 105591677 A